# EUROPEAN PATENT SPECIFICATION

(11) **EP 3 228 660 B1**
(45) Date of publication and mention of the grant of the patent: **17.11.2021**
(21) Application number: 15865838.5
(22) Date of filing: 11.08.2015
(51) Int. Cl.: C08L 23/04, C08K 5/13, C08K 5/14, C08K 5/17, C08K 5/372, C08L 101/02, H01B 3/44, H01B 7/02, C08K 5/134, C08K 5/3435

(54) **CROSSLINKABLE RESIN COMPOSITION, AND ELECTRIC WIRE OR CABLE**
VERNETZBARE HARZZUSAMMENSETZUNG UND ELEKTRISCHER DRAHT ODER ELEKTRISCHES KABEL
COMPOSITION DE RÉSINE RÉTICULABLE, ET FIL OU CÂBLE ÉLECTRIQUE

(30) Priority: 02.12.2014 JP 2014244512
(43) Date of publication of application: 11.10.2017
(73) Proprietor: Eneos Nuc Corporation, Kawasaki-ku Kawasaki-shi Kanagawa 2100862 (JP)
(72) Inventor: HAYASHI Kosei, Tokyo 108-0075 (JP); OHSEKI Tomohiro, Tokyo 108-0075 (JP)
(74) Representative: Grünecker Patent- und Rechtsanwälte PartG mbB
(86) International application number: PCT/JP2015/072809
(87) International publication number: WO 2016/088408

(56) References cited:
- WO-A1-2014/011854
- WO-A1-2015/038467
- JP-A- S60 245 670
- JP-A- 2002 083 516
- JP-A- 2003 535 172
- JP-A- 2003 535 206
- JP-A- 2005 187 595
- JP-A- 2011 258 520
- JP-A- 2012 204 044

## Description

### Technical Field

The present invention relates to a crosslinkable resin composition and an electric wire/cable. More specifically, the present invention relates to a crosslinkable resin composition containing an ethylene-based resin and having good electrical insulation properties, and an electric wire/cable obtained by forming, as an insulating coating layer, a crosslinked product of the resin composition on a conductor.

### Background Art

In general, insulation coated electric wires/cables for electric power are produced by coating a conductor with a crosslinkable resin composition by extrusion processing, and then crosslinking the crosslinkable resin composition to form an insulating coating layer.

For crosslinkable resin compositions used in insulation coated electric wires/cables, for example, resistance to blooming and color change, scorch resistance, process stability, water-tree resistance, thermal deformation resistance, and heat aging resistance are required.

As a resin composition that satisfies these required characteristics and has good storage stability, the present applicant has proposed a crosslinkable resin composition containing an ethylene-based resin, a stabilizer, and an organic peroxide, in which a hindered phenol stabilizer, a dialkyl thiodipropionate stabilizer, and a hindered amine *stabilizer* are used in combination as the stabilizer (refer to, PTL 1 below).

WO 2015/038467 A1 discloses crosslinkable resin compositions useful in the manufacture of insulation sheaths for electric wire and cable. Exemplified are compositions comprising LDPE, 0.20 wt% of distearylthiodipropionate, 0.12 wt% 1,3,5-tris(4-t-butyl-3-hydroxy-2,6-dimethylbenzyl)isocyanuric acid, 0.005 wt% of a compound selected from the group consisting of a mixture of bis(1,2,2,6,6-pentamethyl-4-piperidyl)sebacate and methyl 1,2,2,6.6-pentamethyl-4piperidyl sebacate; (bis-(1-octyloxy-2,2,6,6-tetramethyl-4-piperidinyl) sebacate); (2,2,6,6tetramethyl-4-piperidine)stearate and bis(2,2,6,6l-tetramethyl-4-piperidyl)sebaceate, and 1.8 wt% dicumyl peroxide.

The length (production unit) of an electric wire/cable that is continuously produced by extrusion processing is desirably as long as possible.

This is because, by increasing the production unit of electric wires/cables, the number of connecting joints between the electric wires/cables can be reduced, and the probability of failure of the electric power system can be thereby reduced.

However, it is not easy to realize an increase in the production unit of an electric wire/ cable, in other words, to continuously form an insulating coating layer by extrusion molding for a long time.

Specifically, in an extruder charged with a crosslinkable resin composition for the purpose of forming an insulating coating layer of a cable, a screen mesh is clogged and blocked by a scorched (partially crosslinked) resin component and a stabilizer having a relatively high viscosity. Consequently, the pressure in the extruder increases, and stable extrusion processing cannot be performed.

Furthermore, in general, an extruder for forming an insulating coating layer of a cable is configured so that, when the pressure in the extruder reaches a certain value or more, a limit switch operates to stop the extrusion operation in order to prevent a screen mesh from breaking and to prevent a motor from being overloaded. When the extrusion operation stops, a desired length of the production unit cannot be obtained.

For the reasons of, for example, the realization of high-voltage electric power cables in recent years and the prevention of a dielectric breakdown accident during transmission of electricity, it has been required to prevent foreign matter from being mixed in an insulating coating layer as much as possible. Accordingly, a screen mesh having a smaller mesh size has also been often used in an extruder. As a result, clogging of the screen mesh is accelerated and blocking easily occurs. Thus, the pressure in the extruder increases within a relatively short time, and the extrusion operation stops. Consequently, it is very difficult to continuously form an insulating coating layer by extrusion molding for a long time (to realize an increase in the production unit of an electric wire/cable).

### Citation List

### Patent Literature

PTL 1: Japanese Unexamined Patent Application Publication No. 2002-83516

### Summary of Invention

### Technical Problem

The present invention has been made in view of the circumstances described above.

An object of the present invention is to provide a crosslinkable resin composition which does not easily cause an increase in the pressure in an extruder charged with the crosslinkable resin composition, and with which an insulating coating layer can be continuously formed by extrusion molding for a long time, thereby realizing an increase in the production unit of an electric wire/cable.

Another object of the present invention is to provide an electric wire/cable whose production unit can be larger (longer) than that of an electric wire/cable produced using a publicly known crosslinkable resin composition.

### Solution to Problem

In order to achieve the above objects, the inventors of the present invention conducted intensive studies. As a result, it was found that an increase in the pressure in an extruder charged with a crosslinkable resin composition is significantly suppressed by using, as a stabilizer contained in the crosslinkable resin composition, a hindered amine light stabilizer having a melting point or glass transition point of a certain temperature or less, and specifying molecular weights of all compounds contained in the stabilizer to a certain value or less. This finding led to the completion of the present invention.
(1) Specifically, a crosslinkable resin composition of the present invention contains 100 parts by mass of an ethylene-based resin (A), a stabilizer (B) containing 0.001 to 0.5 parts by mass of a hindered amine light stabilizer (B3) having a melting point or glass transition point of 100°C or less, and 0.5 to 3.0 parts by mass of an organic peroxide (C), in which all compounds contained in the stabilizer (B) have a molecular weight of 1,500 or less, wherein the stabilizer further contains a hindered phenol stabilizer (B1) and a dialkylthiodipropionate stabilizer (B2) in addition to the hindered amine light stabilizer (B3); with the proviso that the crosslinkable resin compositions does not comprise LDPE, 0.20 wt% of distearylthiodipropionate, 0.12 wt% 1,3,5-tris(4-t-butyl-3-hydroxy-2,6-dimethylbenzyl)isocyanuric acid, 0.005 wt% of a compound selected from the group consisting of a mixture of bis(1,2,2,6,6-pentamethyl-4-piperidyl)sebacate and methyl 1,2,2,6.6-pentamethyl-4piperidyl sebacate; (bis-(1-octyloxy-2,2,6,6-tetramethyl-4-piperidinyl) sebacate); (2,2,6,6tetramethyl-4-piperidine)stearate and bis(2,2,6,6l-tetramethyl-4-piperidyl)sebaceate, and 1.8 wt% dicumyl peroxide.
   According to the crosslinkable resin composition having the above configuration, since the hindered amine light stabilizer (B3) has a melting point or glass transition point of 100°C or less, the hindered amine light stabilizer (B3) is in a liquid state under an extrusion temperature condition, and thus does not solidify nor adhere onto element wires of a screen mesh.
   Since all compounds contained in the stabilizer (B) have a low molecular weight of 1,500 or less, the viscosities of the compounds are also low. Thus, the compounds easily pass through a screen mesh in an extruder and do not cause clogging (blocking)
(2) In the crosslinkable resin composition of the present invention, the hindered amine light stabilizer (B3) preferably has a molecular weight of 900 or less.
(3) In the crosslinkable resin composition of the present invention, all the compounds contained in the stabilizer (B) preferably have a reduced viscosity of 0.5 to 3.0 cm³/g at 110°C and a reduced viscosity of 1.0 to 4.0 cm³/g at 40°C, the viscosities being measured in accordance with ISO 1628-1.
(4) An electric wire/cable of the present invention includes a conductor, and an insulating coating layer that covers the conductor, the insulating coating layer being formed by crosslinking the crosslinkable resin composition of the present invention.

### Advantageous Effects of Invention

According to the crosslinkable resin composition of the present invention, it does not easily cause an increase in the pressure in an extruder charged with the crosslinkable resin composition, and an insulating coating layer can be continuously formed by extrusion molding for a long time, thereby realizing an increase in the production unit of an electric wire/cable.

According to the electric wire/cable of the present invention, the production unit can be larger (longer) than that of an electric wire/cable produced using a publicly known crosslinkable resin composition.

Accordingly, by using the electric wire/cable (having a long production unit) of the present invention, the number of connecting joints between production units can be reduced, and the probability of failure of the electric power system can be thereby significantly reduced.

### Description of Embodiments

The present invention will now be described in detail.

### <Crosslinkable resin composition>

A crosslinkable resin composition of the present invention contains an ethylene-based resin (A), a stabilizer (B) containing a hindered amine light stabilizer (B3), a hindered phenol stabilizer (B1) and a dialkyl thiodipropionate stabilizer (B2), and an organic peroxide (C).

### <Ethylene-based resin (A)>

Examples of the ethylene-based resin (A) contained in the crosslinkable resin composition of the present invention include, but are not particularly limited to, high-pressure process low-density ethylene homopolymers, high-pressure process low-density ethylene copolymers, high-density ethylene copolymers, medium-density ethylene copolymers, linear low-density ethylene copolymers, and linear very low-density ethylene copolymers.

These ethylene (co)polymers can be produced by publicly known methods and may be used, as the ethylene-based resin (A), alone or in combination of two or more resins.

Regarding a polymerization catalyst used in the production of the ethylene-based resin (A), in the case of the polymerization by a high-pressure process, examples of the polymerization catalyst include radical-generating catalysts such as organic peroxides, azo compounds, and oxygen. In the case of other polymerization methods, examples of the polymerization catalyst include Ziegler catalysts, Philips catalysts, and metallocene catalysts.

Examples of an α-olefin copolymerized with ethylene in the production of the ethylene-based resin (A) formed of a copolymer include propylene, butene-1, hexene-1, 4-methylpentene-1, octene-1, and decene-1.

Preferred examples of the ethylene-based resin (A) include high-pressure process low-density ethylene homopolymers, high-pressure process low-density ethylene copolymers, and linear low-density ethylene copolymers, all of which have a density of 0.91 to 0.94 g/cm³, in particular, 0.915 to 0.930 g/cm³, and a melt mass-flow rate of 0.01 to 10 g/10 min, in particular, 0.5 to 5 g/10 min.

When an ethylene-based resin having an excessively low density is used, wear resistance of the insulating coating layer that is finally formed tends to degrade. On the other hand, when an ethylene-based resin having an excessively high density is used, flexibility of the insulating coating layer that is finally formed tends to degrade.

An ethylene-based resin having an excessively low melt mass-flow rate has poor processability. On the other hand, when an ethylene-based resin having an excessively high melt mass-flow rate is used, for example, the mechanical strength, thermal deformation resistance, and circularity of the insulating coating layer that is finally formed tend to decrease.

### <Stabilizer (B)>

The stabilizer (B) contained in the crosslinkable resin composition of the present invention contains, as an essential component, a hindered amine light stabilizer (B3) having a melting point or glass transition point of 100°C or less.

Examples of the stabilizer (B) other than the hindered amine light stabilizer (B3) include light stabilizers other than the hindered amine light stabilizer (B3), antioxidants, and process stabilizers.

Examples of the hindered amine light stabilizer (B3), which is an essential stabilizer (B), include compounds represented by general formula (1) below and dimers to tetramers of the compounds (in this case, R¹ represents a divalent to tetravalent group).

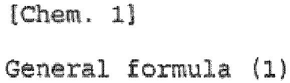

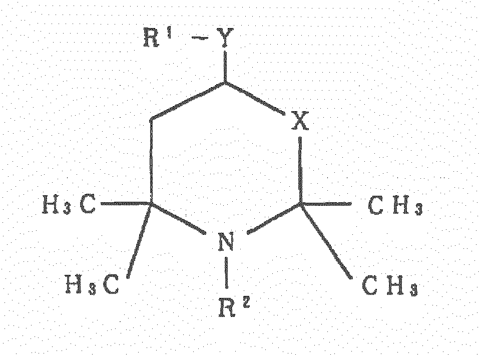

[In general formula (1) above,
•X: -C(O)-, -CH₂-
•Y: -O-, -CH₂-, -NH-, -N(CH₃)-, -N(C₂H₅)-, -O-C(O)-
•R¹: -H, -CₙH₂ₙ₊₁, -C₆H₅, -C₆H₄-CH₃, -C₆H₃(CH₃)₂, -C₆H₄-C₂H₅, -C₆H₁₁, -CR³R⁴-
(when R¹ is a divalent group, a group represented by Y is bonded to each end of the group to form a dimer.) 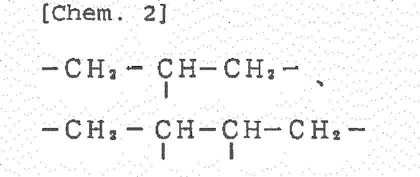 (when R¹ is a trivalent group, a group represented by Y is bonded to each end of the group to form a trimer, and when R¹ is a tetravalent group, a group represented by Y is bonded to each end of the group to form a tetramer.)

•R²: -H, -CₙH₂ₙ₊₁, -C₆H₅, -C₆H₄-CH₃, -C₆H₃(CH₃)₂, -C₆H₄-C₂H₅, -C₆H₁₁, -CR³R⁴-, -O-CₙH₂ₙ₊₁, -O-C₆H₅, -O-C₆H₄-CH₃, -O-C₆H₃(CH₃)₂, -O-C₆H₄-C₂H₅, -O-C₆H₁₁, -O-C₆H₁₀-CH₃, -O-C₆H₉ (CH₃)₂, -O-C₆H₁₀-C₂H₅
•R³: -H, -CₙH₂ₙ₊₁, -C₆H₅, -C₆HₐR⁵_{b}(OH)_{(5-a-b)}
•R⁴: -H, -CₙHₙ
•R⁵: -H, -CH₃, -C₂H₅, -C₃H₇, -C₄H₉
(in the above, n represents a positive integer of 1 to 8, a and b each represent a positive integer, and a + b = 1 to 4.)]

The hindered amine light stabilizer (B3) has a melting point or glass transition point of 100°C or less, preferably 90°C or less.

A hindered amine light stabilizer having a melting point or glass transition point of more than 100°C cannot be completely melted at a processing temperature (for example, 110°C to 140°C) during extrusion processing, and the hindered amine light stabilizer in a solidified state may adhere onto a screen mesh in an extruder.

In order to realize long-term extrusion stability of the crosslinkable resin composition of the present invention, usually, the hindered amine light stabilizer (B3) essentially has a molecular weight of 1,500 or less, preferably 1,200 or less, and more preferably 900 or less.

A hindered amine light stabilizer having a molecular weight of more than 1,500 causes clogging (blocking) of a screen mesh in an extruder, resulting in an increase in the pressure in the extruder. Thus, extrusion processing cannot be performed for a long time (refer to Comparative Examples 1 and 2 described below).

Specific examples of the hindered amine light stabilizer (B3) include tetrakis(1,2,2,6,6-pentamethyl-4-piperidyl)butane-1,2,3,4-te tracalboxylate (LA-52, manufactured by ADEKA Corporation), 2,2,6,6-tetramethyl-4-piperidyl methacrylate (LA-87, manufactured by ADEKA Corporation), and bis(2,2,6,6-tetramethyl-4-piperidyl)sebacate (LA-77, manufactured by ADEKA Corporation or TINUVIN 770, manufactured by BASF). These may be used, as the component (B3), alone or in combination of two or more compounds.

The content of the hindered amine light stabilizer (B3) is 0.001 to 0.5 parts by mass and preferably 0.003 to 0.1 parts by mass relative to 100 parts by mass of the ethylene-based resin (A) .

When the hindered amine light stabilizer (B3) is not contained or the content of the hindered amine light stabilizer (B3) is excessively low, the amount of water produced by secondary degradation of an organic peroxide (C) described below increases and electrical properties (insulating properties) are impaired (refer to Comparative Example 3 described below).

On the other hand, when the content is excessively high, the effect on storage stability is saturated and electrical properties and heat aging resistance may be impaired.

In order to realize long-term extrusion stability of the crosslinkable resin composition of the present invention, not only the hindered amine light stabilizer (B3) but also all the compounds contained in the stabilizer (B) essentially each have a molecular weight of 1,500 or less, and preferably 1,200 or less.

When a stabilizer having a molecular weight of more than 1,500 is contained, the stabilizer having such a high molecular weight causes clogging (blocking) of a screen mesh in an extruder, resulting in an increase in the pressure in the extruder. Thus, extrusion processing cannot be performed for a long time.

All the compounds contained in the stabilizer (B), the compounds including the hindered amine light stabilizer (B3), preferably have a reduced viscosity of 0.5 to 3.0 cm³/g at 110°C and a reduced viscosity of 1.0 to 4.0 cm³/g at 40°C, the viscosities being measured in accordance with ISO 1628-1.

When a stabilizer having a reduced viscosity of more than 3.0 cm³/g at 110°C or a reduced viscosity of more than 4.0 cm³/g at 40°C is contained, the stabilizer having such a high viscosity causes clogging (blocking) of a screen mesh in an extruder, resulting in an increase in the pressure in the extruder. Thus, extrusion processing cannot be performed for a long time.

The crosslinkable resin composition of the present invention contains, as antioxidants contained in the stabilizer (B), a hindered phenol stabilizer (B1) and a dialkyl thiodipropionate stabilizer (B2). Examples of the hindered phenol stabilizer (B1), include compounds having a hindered phenol structure and having a molecular weight of 1,500 or less.

Specific examples of the hindered phenol stabilizer (B1) include 4,4'-thiobis-(3-methyl-6-t-butylphenol) (SEENOX BCS, manufactured by Shipro Kasei Kaisha, Ltd.), 4,4'-thiobis-(6-t-butyl-o-cresol) (ETHANOX 736, manufactured by Ethyl Corporation), tetrakis[methylene-3-(3',5'-di-t-butyl-4'-hydroxyphenyl)prop ionate]methane (Irganox 1010, manufactured by BASF), N,N'-bis[3-(3,5-di-t-butyl-4-hydroxyphenyl)propionyl]hydrazi ne (Irganox 1024, manufactured by BASF), 1,3,5-tris(4-t-butyl-3-hydroxy-2,6-dimethylbenzyl)isocyanuri c acid (Cyanox 1790, manufactured by CYTEC Industries Inc.),
1,3,5-trimethyl-2,4-6-tris(3,5-di-t-butyl-4-hydroxybenzyl)be nzene (ETHANOX 330, manufactured by Albemarle Corporation), triethylene
glycol-bis[3-(3-t-butyl-5-methyl-4-hydroxyphenyl)propionate] (Irganox 245, manufactured by BASF),
1,6-hexanediol-bis[3-(3,5-di-t-butyl-4-hydroxyphenyl)propion ate] (Irganox 259, manufactured by BASF),
octadecyl-3-(3,5-di-t-butyl-4-hydroxyphenyl)propionate (Irganox 1076, manufactured by BASF),
N,N'-hexamethylenebis(3,5-di-t-butyl-4-hydroxy-hydrocinnamam ide) (Irganox 1098, manufactured by BASF),
1,3,5-trimethyl-2,4,6-tris(3,5-di-t-butyl-4-hydroxybenzyl)be nzene (Irganox 1330, manufactured by BASF),
tris-(3,5-di-t-butyl-4-hydroxybenzyl)-isocyanurate (Irganox 3114, manufactured by BASF),
isooctyl-3-(3,5-di-t-butyl-4-hydroxyphenyl)propionate (Irganox 1135, manufactured by BASF),
1,1,3-tris(2-methyl-4-hydroxy-5-t-butylphenyl)butane (ADK STAB AO-30, manufactured by ADEKA Corporation),
4,4'-butylidenebis-(3-methyl-6-t-butylphenol) (ADK STAB AO-40, manufactured by ADEKA Corporation), and
2,2'-thiobis-(4-methyl-6-t-butylphenol). These may be used, as the component (B1), alone or in combination of two or more compounds.

The content of the hindered phenol stabilizer (B1) is preferably 0.01 to 1.0 part by mass, and more preferably 0.02 to 0.5 parts by mass relative to 100 parts by mass of the ethylene-based resin (A).

Examples of the dialkyl thiodipropionate stabilizer (B2), which is an optional stabilizer (B), include compounds having an alkyl group with 10 to 20 carbon atoms and having a molecular weight of 1,500 or less.

Specific examples of the dialkyl thiodipropionate stabilizer (B2) which include dilauryl thiodipropionate (DLTP "YOSHITOMI", manufactured by Yoshitomi pharmaceutical industries, ltd.), distearyl thiodipropionate (DSTP "YOSHITOMI", manufactured by Yoshitomi pharmaceutical industries, ltd.), and dimyristyl thiodipropionate (DMTP "YOSHITOMI", manufactured by Yoshitomi pharmaceutical industries, ltd.). These may be used, as the component (B2), alone or in combination of two or more compounds.

The content of the dialkyl thiodipropionate stabilizer (B2) is preferably 0.005 to 0.6 parts by mass, and more preferably 0.01 to 0.3 parts by mass relative to 100 parts by mass of the ethylene-based resin (A).

### <Organic peroxide (C)>

Examples of the organic peroxide (C) contained in the crosslinkable resin composition of the present invention include publicly known compounds used as a crosslinking agent of ethylene-based resins.

Specific examples of the organic peroxide (C) include di-t-butyl-peroxide, 1,1-bis-t-butyl-peroxybenzoate, 2,2-bis-t-butyl-peroxybutane, t-butyl-peroxybenzoate, dicumylperoxide, 2,5-dimethyl-2,5-di-t-butyl-peroxyhexane, t-butyl-cumylperoxide, and 2,5-dimethyl-2,5-di-t-butyl-peroxyhexyne-3. These may be used alone or in combination of two or more compounds.

The content of the organic peroxide (C) in the crosslinkable resin composition of the present invention is usually 0.5 to 3.0 parts by mass and preferably 1.0 to 2.5 parts by mass relative to 100 parts by mass of the ethylene-based resin (A).

When the content of the organic peroxide (C) is less than 0.5 parts by mass, the insulating coating layer that is finally formed has poor thermal deformation resistance.

On the other hand, when the content exceeds 3.0 parts by mass, the resulting crosslinkable resin composition has poor scorch resistance.

### <Optional component>

In the crosslinkable resin composition of the present invention, besides the above-mentioned ethylene-based resin (A), the stabilizer (B) containing the hindered amine light stabilizer (B3), the hindered phenol stabilizer (B1), the dialkyl thiodipropionate stabilizer (B2), and the organic peroxide (C), an olefin-based resin other than the ethylene-based resin (A), various additives, and auxiliary materials may be contained in a range that does not impair characteristics of the resin composition of the present invention and according to the purpose of use. Examples of the olefin-based resins, which are optional components, include ethylene-vinyl acetate copolymers, ethylene-ethyl acrylate copolymers, ethylene-methyl acrylate copolymers, ethylene-butyl acrylate copolymers, ethylene-maleic acid copolymers, ethylene-diene compound copolymers, ethylene-vinylsilane copolymers, maleic anhydride grafted ethylene-based polymers, acrylic acid grafted ethylene-based polymers, and silane grafted ethylene-based polymers.

Examples of the various additives and the auxiliary materials, which are optional components, include a stabilizer other than the stabilizer (B) described above, a processability improver, a dispersant, a copper inhibitor, an antistatic agent, a lubricant, carbon black, a crosslinking aid such as triallyl cyanurate, and an antiscorching agent such as *α*-methylstyrene dimer.

The crosslinkable resin composition of the present invention can be prepared by mixing the essential components [ethylene-based resin (A), the stabilizer (B), and the organic peroxide (C)] and the optional components at a particular ratio, kneading the resulting mixture, and granulating the mixture.

The crosslinkable resin composition of the present invention is preferably provided in the form of pellets having an average particle size of about 2 to 7 mm from the viewpoint of, for example, the ease of engaging in a screw of an extruder and handleability.

Examples of the method for producing a pelletized crosslinkable resin composition include
(i) a method including mixing the ethylene-based resin (A), the stabilizer (B), the organic peroxide (C), and the optional components, melt-kneading the resulting mixture using a publicly known kneader (e.g., a Banbury mixer, a continuous mixer, a roller, or a biaxial extruder) by heating at a temperature that is equal to or higher than a melting point of the ethylene-based resin (A) but is lower than a decomposition temperature of the organic peroxide (C), and granulating the resulting resin composition in the form of pellets; and
(ii) a method including mixing the ethylene-based resin (A), the stabilizer (B), and the optional components, melt-kneading the resulting mixture using a publicly known kneader by heating at a temperature that is equal to or higher than a melting point of the ethylene-based resin (A), granulating the resulting kneaded product in the form of pellets, subsequently, adding, to the pelletized kneaded product, the organic peroxide (C) that is heated to a melting point thereof or higher to be in a liquid state, and, as required, aging the resulting product at a temperature lower than the melting point of the ethylene-based resin (A), thereby uniformly dispersing the organic peroxide (C) in the pellets.

### <Electric wire/cable>

An electric wire/cable of the present invention includes a conductor and an insulating coating layer that covers the conductor, the insulating coating layer being formed by crosslinking the crosslinkable resin composition of the present invention, that is, the insulating coating layer being formed of a crosslinked product of the resin composition.

The electric wire/cable of the present invention can be produced by covering a conductor that is mainly formed of copper or aluminum with the crosslinkable resin composition of the present invention by extrusion processing, and crosslinking the crosslinkable resin composition to form an insulating coating layer.

In general, in a case of a low-voltage cable, a conductor is covered with only a single layer using a single-layer extruder. In a case of a high-voltage cable, a conductor is covered with a laminate including a first layer formed of an inner semi-conducting layer resin composition, a second layer formed of the crosslinkable resin composition of the present invention, and a third layer formed of an outer semi-conducting layer resin composition using a three-layer extruder at a temperature that is equal to or higher than a melting point of each resin but is lower than a decomposition temperature of the organic peroxide (C). Subsequently, the resin composition is crosslinked by performing heating at a temperature equal to or higher than the decomposition temperature of the organic peroxide (C) in an atmosphere of, for example, nitrogen, water vapor, silicone oil, or a molten salt. Through the above steps, the cables can be produced.

The electric wire/cable of the present invention has good properties such as mechanical properties, electrical properties (insulating properties of the coating layer), and long-term storage properties. Furthermore, during the production of the electric wire/cable (extrusion molding step), an increase in the pressure in an extruder is small, and extrusion processing can be stably performed for a long time.

### EXAMPLES

Examples of the present invention will be described below. However, the present invention is not limited to these Examples. Herein, ethylene-based resins, stabilizers, and organic peroxides used for producing resin compositions of Examples and Comparative Examples are as follows.

Reduced viscosities of each of stabilizers described below were determined in accordance with ISO 1628-1 or JIS K7367-3 (2002) by diluting the stabilizer with xylene to prepare diluted solutions having different concentrations, measuring dynamic viscosities at 40°C and 110°C with a capillary viscometer, and then converting the dynamic viscosities to reduced viscosities.

### •Resin (A-1):

High-pressure process low-density ethylene homopolymer, melt mass-flow rate (MFR) = 2.2 g/10 min, density 0.922 g/cm³ (manufactured by NUC Corporation)

### •Stabilizer (B1-1):

- Hindered phenol stabilizer (B1), molecular weight = 1,178
- Compound name:
   Tetrakis[methylene-3-(3,5'-di-t-butyl-4'-hydroxyphenyl)propi onate]methane
- Trade name: Irganox 1010 (manufactured by BASF)
- Reduced viscosity (40°C): 3.2 cm³/g
- Reduced viscosity (110°C): 1.9 cm³/g
- Melting point or glass transition point: 110°C to 125°C

### •Stabilizer (B1-2):

- Hindered phenol stabilizer (B1), molecular weight = 359
- Compound name: 4,4'-Thiobis-(3-methyl-6-t-butylphenol)
- Trade name: SEENOX BCS (manufactured by Shipro Kasei Kaisha, Ltd.)
- Reduced viscosity (40°C): 2.7 cm³/g
- Reduced viscosity (110°C): 1.3 cm³/g
- Melting point or glass transition point: 160°C

### •Stabilizer (B2-1):

- Dialkyl thiodipropionate stabilizer (B2), molecular weight = 682
- Compound name: Distearyl thiodipropionate
- Trade name: DSTP "YOSHITOMI" (manufactured by Yoshitomi pharmaceutical industries, ltd.)
- Reduced viscosity (40°C): 3.8 cm³/g
- Reduced viscosity (110°C): 2.6 cm³/g
- Melting point or glass transition point: 64°C to 67°C

### •Stabilizer (B3-1):

- Hindered amine light stabilizer (B3), molecular weight = 481
- Compound name:
   Bis(2,2,6,6-tetramethyl-4-piperidyl)sebacate
- Trade name: LA-77 (manufactured by ADEKA Corporation)
- Reduced viscosity (40°C): 2.7 cm³/g
- Reduced viscosity (110°C): 1.6 cm³/g
- Melting point or glass transition point: 81°C to 85°C

### •Stabilizer (B3-2):

- Hindered amine light stabilizer (B3), molecular weight = 847
- Compound name:
   Tetrakis(1,2,2,6,6-pentamethyl-4-piperidyl)butane-1,2,3,4-te tracalboxylate
- Trade name: LA-52 (manufactured by ADEKA Corporation)
- Reduced viscosity (40°C): 3.0 cm³/g
- Reduced viscosity (110°C): 2.0 cm³/g
- Melting point or glass transition point: 65°C to 68°C

### •Stabilizer (B3-3):

- Hindered amine light stabilizer (for comparison), molecular weight = 2,000 to 3,100
- Compound name:
   Poly((6-((1,1,3,3-tetramethylbutyl)amino)-1,3,5-triadine-2,4 -diyl)(2-(2,2,6,6-tetramethyl-4-piperidyl)imino))hexamethyle ne((2,2,6,6-tetramethyl-4-piperidyl)imino))
- Trade name: CHIMASSORB 944 (manufactured by BASF)
- Reduced viscosity (40°C): 7.3 cm³/g
- Reduced viscosity (110°C): 4.7 cm³/g
- Melting point or glass transition point: 100°C to 135°C

### •Stabilizer (B3-4):

- Hindered amine light stabilizer (For comparison), molecular weight = 3,100 to 4,000
- Polycondensate of dimethyl succinate with 1-(2-hydroxyethyl)-4-hydroxy-2,2,6,6-tetramethyl-4-piperidin e
- Trade name: TINUVIN 622 (manufactured by BASF)
- Reduced viscosity (40°C): 20.3 cm³/g
- Reduced viscosity (110°C): 14.1 cm³/g
- Melting point or glass transition point: 55°C to 77°C

### •Organic peroxide (C-1): Dicumylperoxide

### <Example 1>

In accordance with the formula shown in Table 1 below, 100 parts by mass of the resin (A-1), 0.1 parts by mass of the stabilizer (B1-1) and 0.1 parts by mass of the stabilizer (B1-2) serving as the hindered phenol stabilizer (B1), 0.1 parts by mass of the stabilizer (B2-1) serving as the dialkyl thiodipropionate stabilizer (B2), and 0.02 parts by mass of the stabilizer (B3-1) serving as the hindered amine light stabilizer (B3) were mixed. The resulting mixture was kneaded with a Banbury mixer at a temperature of 180°C for 10 minutes. Subsequently, the resulting kneaded product was granulated into pellets having a diameter of 3 mm and a length of 2 mm.

Next, 1.6 parts by mass of the organic peroxide (C-1) that was heated to be in a liquid state was added to the pelletized kneaded product. The resulting kneaded product was mixed in a heated state at 60°C in a blender for three hours, and then cooled to room temperature. Thus, a crosslinkable resin composition of the present invention was obtained.

### <Example 2>

A crosslinkable resin composition of the present invention was obtained as in Example 1 except that the amount of the stabilizer (B3-1) mixed was changed to 0.01 parts by mass in accordance with the formula shown in Table 1 below.

### <Example 3>

A crosslinkable resin composition of the present invention was obtained as in Example 1 except that the amount of the stabilizer (B3-1) mixed was changed to 0.005 parts by mass in accordance with the formula shown in Table 1 below.

### <Example 4>

A crosslinkable resin composition of the present invention was obtained as in Example 1 except that 0.005 parts by mass of the stabilizer (B3-2) was mixed instead of the stabilizer (B3-1) in accordance with the formula shown in Table 1 below.

### <Comparative Example 1>

A crosslinkable resin composition for comparison was obtained as in Example 1 except that 0.005 parts by mass of the stabilizer (B3-3) was mixed instead of the stabilizer (B3-1) in accordance with the formula shown in Table 1 below.

### <Comparative Example 2>

A crosslinkable resin composition for comparison was obtained as in Example 1 except that 0.005 parts by mass of the stabilizer (B3-4) was mixed instead of the stabilizer (B3-1) in accordance with the formula shown in Table 1 below.

### <Comparative Example 3>

A crosslinkable resin composition for comparison was obtained as in Example 1 except that the stabilizer (B3-1) was not mixed in accordance with the formula shown in Table 1 below.

For each of the crosslinkable resin compositions obtained in Examples 1 to 4 and Comparative Examples 1 to 3 described above, extrusion stability, the amount of water production, water-tree resistance, heat aging resistance, and thermal deformation property were evaluated and measured. The methods for the evaluation and measurement are described in (1) to (5) below. The results are also shown in Table 1.

### (1) Extrusion stability:

A screen mesh of 80/150/400/80 mesh was attached to a single-screw extruder having an effective length of (L/D) = 25. Each of the crosslinkable resin compositions obtained in Examples and Comparative Examples was extruded at a temperature of 115°C and at a rotational speed of 30 rpm. The pressure in the extruder immediately after the start of extrusion and the pressure in the extruder 8 hours from the start of the extrusion were measured, and the rate of increase in the pressure was calculated. Regarding evaluation criteria, a rate of increase of less than 2% was evaluated as acceptable.

### (2) Amount of water production:

Each of the crosslinkable resin compositions obtained in Examples and Comparative Examples was preliminarily formed into a sheet using a compression press molding machine at 120°C and at 0.5 MPa for 5 minutes. Subsequently, the resulting sheet was crosslinked at 180°C and at 15 MPa for 20 minutes to prepare a sheet having a thickness of 6 mm.

The sheet was stored in an air atmosphere at 80°C for 28 days. Every 24 hours during the storage, 2 g of the sheet was cut out from a central portion in the thickness direction of the 6-mm sheet to prepare a sample. The water content of the sample was measured using a Karl Fischer moisture meter under the conditions of a measurement temperature of 200°C and a measurement time of 20 minutes.

### (3) Water-tree resistance:

Each of the crosslinkable resin compositions obtained in Examples and Comparative Examples was preliminarily formed into a sheet using a compression press molding machine at 120°C and at 0.5 MPa for 5 minutes. Subsequently, the resulting sheet was crosslinked at 180°C and at 15 MPa for 20 minutes to prepare a sheet having a thickness of 3 mm.

An alternating-current voltage of 1 kV/1, 000 Hz was applied to the sheet using a water electrode for 500 hours. The sheet was then sliced in the thickness direction to have a size of about 0.1 mm to prepare 10 sliced pieces. The sliced pieces were stained by immersing in a methylene blue staining solution. The stained sliced pieces were observed with an optical microscope, and whether or not a water tree was generated was examined. When the generation of a water tree was not observed, the resin composition was evaluated as acceptable.

### (4) Heat aging resistance:

The heat aging resistance was measured in accordance with IEC-60840. After storage at a temperature of 135°C for 7 days, retention rates of tensile strength and tensile elongation were measured. A retention rate of 80% or more was evaluated as acceptable.

### (5) Thermal deformation property:

The thermal deformation property was evaluated by the hot-set test specified in IEC-60811-2-1. In a high-temperature atmosphere at 200°C, a load of 20 N/cm² was hung on a strip-shaped test piece, and the test piece was left to stand for 15 minutes. When the elongation percentage of the distance between reference lines after the standing was 100% or less and the permanent elongation percentage of the distance between the reference lines after removal of the load was 10% or less, the resin composition was evaluated as acceptable.

**[Table 1]**

| | | Example 1 | Example 2 | Example 3 | Example 4 | Comparative Example 1 | Comparative Example 2 100 | Comparative Example 3 100 |
|---|---|---|---|---|---|---|---|---|
| Resin (A-1) | | 100 | 100 | 100 | 100 | 100 | | |
| Stabilizer (B1-1) | | 0.1 | 0.1 | 0.1 | 0.1 | 0.1 | 0.1 | 0.1 |
| Stabilizer (B1-2) | | 0.1 | 0.1 | 0.1 | 0.1 | 0.1 | 0.1 | 0.1 |
| Stabilizer (B2-1) | | 0.1 | 0.1 | 0.1 | 0.1 | 0.1 | 0.1 | 0.1 |
| Stabilizer (B3-1) | | 0.02 | 0.01 | 0.005 | | | | |
| Stabilizer (B3-2) | | | | | 0.005 | | | |
| Stabilizer (B3-3) | | | | | | 0.005 | | |
| Stabilizer | | | | | | | 0.005 | |
| (B3-4) | Organic peroxide (C-1) | 1.6 | 1.6 | 1.6 | 1.6 | 1.6 | 1.6 | 1.6 |
| | Rate of increase in pressure [%] | 1.0 | 0.9 | 0.8 | 0.9 | 18.5 | 22.8 | 0.5 |
| Extrusion stability | Evaluation | Acceptable | Acceptable | Acceptable | Acceptable | Not acceptable | Not acceptable | Acceptable |
| Amount of water production (80°C) [PPM] | Before storage under heating | 45 | 40 | 43 | 47 | 50 | 56 | 97 |
| | 2 Days later | 67 | 60 | 69 | 68 | 67 | 07 | 7715 |
| | later 59 | | | | | | | |
| | ter 514 | | | | | | | |
| | 4947504 | 4 | | | | | | |
| | 4550483 | 4 | 1 | | | | | |
| | 4 | | | r | | | c | |
| A abl Apab | | Acpa | Acpa | Noac | ble | ari | esl | gt |
| 99 07 | sit [ | | | | 9 | | | |
| | eaeab be | | | | | t | | |
| | rml | onp | pla | on | catno | [ | 858 | |
| em d% | 0 0iA | | | | | c | | |
| | ce | | | | | | | |
| | | | | | | | | |

As is apparent from the results shown in Table 1, regarding each of the crosslinkable resin compositions obtained in Examples 1 to 4, the rate of increase in the pressure in the extruder charged with the crosslinkable resin composition is very low, and thus these crosslinkable resin compositions have good extrusion stability.

Therefore, according to the crosslinkable resin compositions obtained in Examples 1 to 4, since an insulating coating layer can be continuously formed by extrusion molding for a long time, an increase in the production unit of an electric wire/cable can be realized.

In addition, these crosslinkable resin compositions each have a small amount of water production, good water-tree resistance, good heat aging resistance, and good thermal deformation property, and thus are suitable as insulating coating materials of an electric wire/cable.

In contrast, regarding the crosslinkable resin compositions obtained in Comparative Examples 1 and 2, the rate of increase in the pressure in the extruder charged with the crosslinkable resin composition is high, and thus these crosslinkable resin compositions have poor extrusion stability.

Therefore, according to the crosslinkable resin compositions obtained in Comparative Examples 1 and 2, since an insulating coating layer cannot be continuously formed by extrusion molding for a long time, an increase in the production unit of an electric wire/cable cannot be realized.

The crosslinkable resin composition obtained in Comparative Example 3 has poor water-tree resistance and poor heat aging resistance and thus is not suitable as an insulating coating material of an electric wire/cable.

## Claims

1. A crosslinkable resin composition comprising:
100 parts by mass of an ethylene-based resin (A);
a stabilizer (B) containing 0.001 to 0.5 parts by mass of a hindered amine light stabilizer (B3) having a melting point or glass transition point of 100°C or less; and
0.5 to 3.0 parts by mass of an organic peroxide (C),
wherein all compounds contained in the stabilizer (B) have a molecular weight of 1,500 or less;
wherein the stabilizer (B) further contains a hindered phenol stabilizer (B1) and a dialkyl thiodipropionate stabilizer (B2) in addition to the hindered amine light stabilizer (B3);
with the proviso that the crosslinkable resin composition does not comprise LDPE, 0.20 wt% of distearylthiodipropionate, 0.12 wt% 1,3,5-tris(4-t-butyl-3-hydroxy-2,6-dimethylbenzyl)isocyanuric acid, 0.005 wt% of a compound selected from the group consisting of a mixture of bis(1,2,2,6,6-pentamethyl-4-piperidyl)sebacate and methyl 1,2,2,6,6-pentamethyl-4-piperidyl sebacate; (bis-(1-octyloxy-2,2,6,6-tetramethyl-4-piperidinyl) sebacate); (2,2,6,6-tetramethyl-4-piperidine)stearate and bis(2,2,6,6,-tetramethyl-4-piperidyl)sebaceate, and 1.8 wt% dicumyl peroxide.

2. The crosslinkable resin composition according to claim 1, wherein the hindered amine light stabilizer (B3) has a molecular weight of 900 or less.

3. The crosslinkable resin composition according to claim 1 or 2, wherein all the compounds contained in the stabilizer (B) have a reduced viscosity of 0.5 to 3.0 cm³/g at 110°C and a reduced viscosity of 1.0 to 4.0 cm³/g at 40°C, the viscosities being measured in accordance with ISO 1628-1.

4. An electric wire/cable comprising a conductor; and an insulating coating layer that covers the conductor, the insulating coating layer being formed by crosslinking the crosslinkable resin composition according to any one of claims 1 to 3.

## Patentansprüche

1. Vernetzbare Harzzusammensetzung, mit:
100 Massenteilen eines Ethylen-basierten Harzes (A);
einem Stabilisationsmittel (B), das 0,001 bis 0,5 Massenteile eines eingeschränkten Amin-Lichtstabilisators (B3) mit einem Schmelzpunkt oder einem Glasübergangspunkt von 100 °C oder weniger enthält; und
0,5 bis 3,0 Massenteilen eines organischen Peroxids (C),
wobei alle Anteile, die in dem Stabilisationsmittel (B) enthalten sind, ein Molekulargewicht von 1.500 oder kleiner haben;
wobei das Stabilisationsmittel (B) ferner einen eingeschränkten Phenol-Stabilisator (B1) und einen Dialkyl-Thiodipropionat-Stabilisator (B2) zusätzlich zu dem eingeschränkten Amin-Lichtstabilisator (B3) enthält;
mit der Bedingung, dass die vernetzbare Harzzusammensetzung LDPE nicht aufweist, 0,20 Gew.-% Distearylthiodipropionat, 0,12 Gew.-% 1,3,5-Tris(4-t-butyl-3-hydroxy-2,6-dimethylbenzyl)isocyanursäure, 0,005 Gew.-% eines Stoffes, der aus der Gruppe ausgewählt ist, die besteht aus einer Mischung aus Bis(1,2,2,6,6-pentamethyl-4-piperidyl)sebacat und Methyl-1,2,2,6,6-pentamethyl-4-piperidyl-sebacat; (Bis-)1-octyloxy-2,2,6,6-tetramethyl-4-piperidinyl)sebacat); (2,2,6,6-Tetramethyl-4-piperidin)stearat und Bis(2,2,6,6-tetramethyl-4-piperidyl)sebacat, und 1,8 Gew.-% Dicumyl-Peroxid.

2. Vernetzbare Harzzusammensetzung nach Anspruch 1, wobei der eingeschränkte Amin-Lichtstabilisator (B3) ein Molekulargewicht von 900 oder kleiner hat.

3. Vernetzbare Harzzusammensetzung nach Anspruch 1 oder 2, wobei alle Stoffe, die in dem Stabilisationsmittel (B) enthalten sind, eine reduzierte Viskosität von 0,5 bis 3,0 cm³/g bei 110 °C und eine reduzierte Viskosität von 1,0 bis 4,0 cm³/g bei 40 °C haben, und wobei die Viskositäten entsprechend der ISO 1628-1 gemessen werden.

4. Elektrische(s) Leitung/Kabel mit einem Leiter; und einer isolierenden Mantelschicht, die den Leiter bedeckt, wobei die isolierende Mantelschicht hergestellt ist durch Vernetzung einer vernetzbaren Harzzusammensetzung nach einem der Ansprüche 1 bis 3.

## Revendications

1. Composition de résine réticulable comprenant :
100 parties en masse d'une résine (A) à base d'éthylène ;
un stabilisant (B) contenant de 0,001 à 0,5 partie en masse d'un photostabilisant à amine encombrée (B3) ayant un point de fusion ou un point de transition vitreuse inférieur ou égal à 100 °C ; et
de 0,5 à 3,0 parties en masse d'un peroxyde organique (C) ;
tous les composés contenus dans le stabilisant (B) ayant un poids moléculaire inférieur ou égal à 1500 ;
le stabilisant (B) contenant en outre un stabilisant à phénol encombré (B1) et un stabilisant à base de thiodipropionate de dialkyle (B2) en plus du photostabilisant à amine encombrée (B3) ;
à condition que la composition de résine réticulable ne comprenne pas de LDPE, 0,20 % en poids de thiodipropionate de distéaryle, 0,12 % en poids d'acide 1,3,5-tris(4-*t*-butyl-3-hydroxy-2,6-diméthylbenzyl)isocyanurique, 0,005 % en poids d'un composé choisi dans le groupe constitué par un mélange de sébaçate de bis(1,2,2,6,6-pentaméthyl-4-pipéridyle) et de sébaçate de 1,2,2,6,6-pentaméthyl-4-pipéridyle et de méthyle ; du sébaçate de bis(1-octyloxy-2,2,6,6-tétraméthyl-4-pi-péridinyle) ; du stéarate de 2,2,6,6-tétraméthyl-4-pipéridine et du sébaçate de bis(2,2,6,6-tétraméthyl-4-pipéridyle) et 1,8 % en poids de peroxyde de dicumyle.

2. Composition de résine réticulable selon la revendication 1, dans laquelle le photostabilisant à amine encombrée (B3) a un poids moléculaire inférieur ou égal à 900.

3. Composition de résine réticulable selon la revendication 1 ou 2, dans laquelle tous les composés contenus dans le stabilisant (B) ont une viscosité réduite de 0,5 à 3,0 cm³/g à 110 °C et une viscosité réduite de 1,0 à 4,0 cm³/g à 40 °C, les viscosités étant mesurées conformément à l'ISO 1628-1.

4. Fil/câble électrique comprenant un conducteur ; et une couche de revêtement isolante qui recouvre le conducteur, la couche de revêtement isolante étant formée en réticulant la composition de résine réticulable selon l'une quelconque des revendications 1 à 3.
